# EUROPÄISCHE PATENTSCHRIFT

(11) **EP 1 221 083 B1**
(45) Veröffentlichungstag und Bekanntmachung des Hinweises auf die Patenterteilung: **15.10.2003**
(21) Anmeldenummer: 00949436.0
(22) Anmeldetag: 02.08.2000
(51) Int. Cl.: G06F 3/033, G01C 21/36

(54) **VORRICHTUNG ZUR STEUERUNG EINER BILDSCHIRMANZEIGE**
DEVICE FOR CONTROLLING A DISPLAY
DISPOSITIF POUR LA COMMANDE D'UNE PAGE D'ECRAN

(30) Priorität: 13.09.1999 DE 19943580
(43) Veröffentlichungstag der Anmeldung: 10.07.2002
(73) Patentinhaber: Bayerische Motoren Werke Aktiengesellschaft, 80809 München (DE)
(72) Erfinder: KUENZNER, Hermann, D-85356 Freising (DE); HERRLER, Michael, D-80796 München (DE)
(86) Internationale Anmeldenummer: EP0007458
(87) Internationale Veröffentlichungsnummer: WO01020440

(56) Entgegenhaltungen:
- EP-A- 0 701 926
- EP-A- 0 911 750
- WO-A-97/21295
- DE-A- 3 836 555

## Beschreibung

Die Erfindung bezieht sich auf eine Vorrichtung mit den Merkmalen des Oberbegriffs von Patentanspruch 1.

Eine derartige Vorrichtung ist aus der EP 0911 750 A bekannt. Dabei werden die Menüs komplett und der Reihe nach ins Blickfeld gedreht. Komplett bedeutet, dass zu jedem Menü auch die zugehörigen Untermenüs und Funktionen dargestellt werden. Bei der bekannten Vorrichtung sind nur das jeweils ausgewählte Menü und die benachbart angeordneten Menüs sichtbar. Durch die Darstellung aller Untermenüs und Funktionen leidet die gerade bei einer Vielzahl zugehöriger Untermenüs und Funktionen die Übersichtlichkeit.

Ferner ist aus der DE 197 52 056 A eine Vorrichtung zur Steuerung einer Bildschirmanzeige für ein Kraftfahrzeug zur Auswahl von Menüs und/oder Funktionen bekannt, bei der mit einem drehbaren Bedienelement eine Markierung entsprechend der Stellung des Bedienelements in einer Bildschirmanzeige optisch hervorgehoben wird. Dabei ist zum Erleichtern einer schnellen Orientierung über das gewählte Menü bzw. das/die eingestellte oder ausgelöste Untermenü/Funktion ein hierarchischer Aufbau der Darstellung gewählt. Im Randbereich sind die möglichen Menüs angeordnet, während sich im Mittelbereich die zugehörigen Untermenüs bzw. Funktionen oder Funktionswerte befinden. Die Markierung für das/die ausgewählte oder durch eine vorzugsweise vorgesehene Enter-Funktion ausgelöste Menü/Untermenü/Funktion ist in der Bildschirmanzeige vorzugsweise optisch herausgestellt und befindet sich je nach der getroffenen Wahl an verschiedenen Stellen des Bildschirms. Werden das Menü und das/die gewählte Untermenü/Funktion gleichzeitig optisch hervorgehoben markiert, befinden sich diese Markierungen an wechselnden Stellen des Bildschirms.

Der Erfindung liegt die Aufgabe zugrunde, eine Vorrichtung der eingangs genannten Art zu schaffen, bei der die gewählte Einstellung, d. h. das/die eingestellte oder ausgelöste Menü/Untermenü/Funktion, schnell und eindeutig erkennbar ist.

Die Erfindung löst diese Aufgabe durch die Merkmale des Patentanspruchs 1.

Nunmehr befindet sich die den Betrachter primär interessierende Markierung stets an derselben Stelle des Bildschirms. Ein zeitaufwendiges blickmässiges "Umherirren" entfällt. Wird das/die der Markierung zugeordnete Menü/Funktion ausgewählt, tritt es/sie in den Hintergrund. Der Bediener erhält eine optische Rückmeldung für seine Aktion, kann aber das ausgewählte Objekt (Menü/Funktion) optisch im Auge behalten.

Vorteilhafte Ausgestaltungen der Erfindung sind Gegenstand der weiteren Patentansprüche und werden zusammen mit weiteren Erfindungsmerkmalen anhand der Zeichnung näher erläutert. Es zeigt
Fig. 1 eine Bildschirmanzeige, die im Rahmen der erfindungsgemäßen Multifunktions-Bedieneinrichtung verwendet wird,

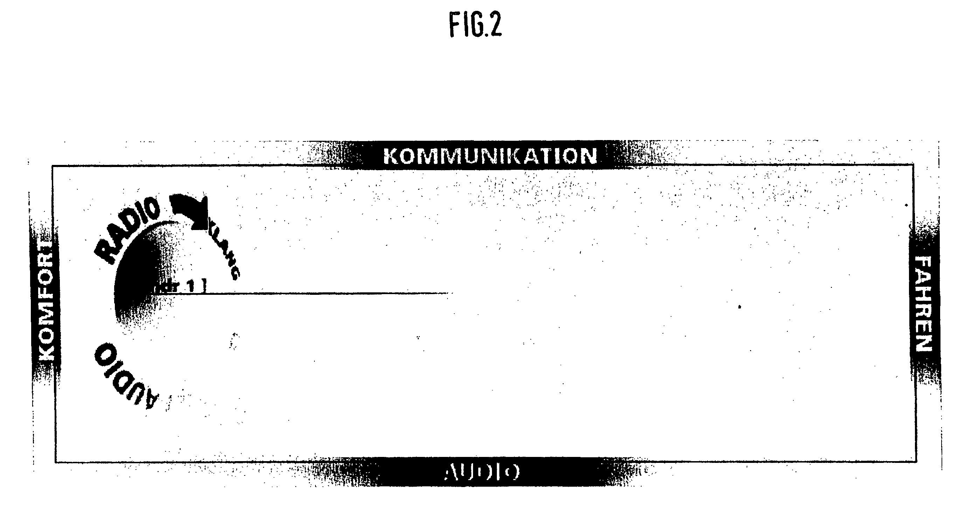

Fig. 2-4 die Bildschirmanzeige von Fig. 1 nach Betätigen eines zugeordneten Bedienelements.

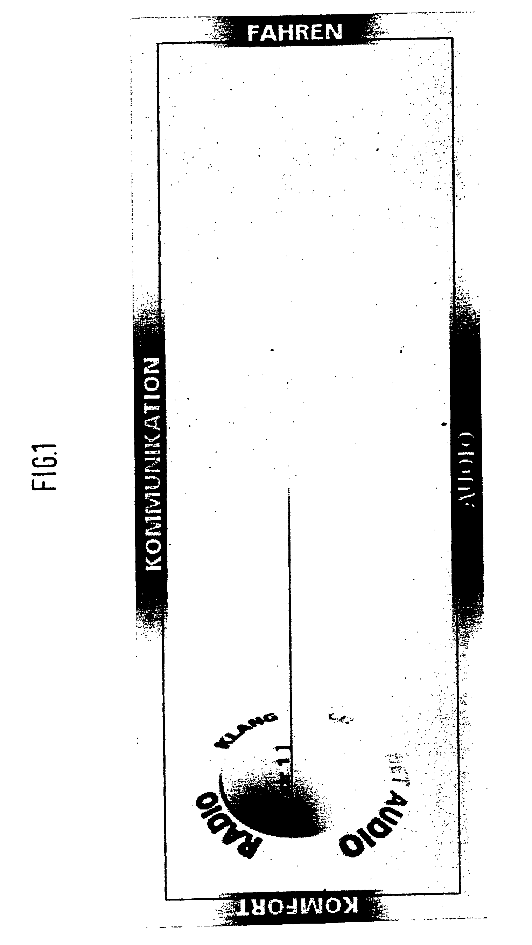

In Fig. 1 ist die im Rahmen der Erfindung vorgesehene Bildschirmanzeige prinzipiell dargestellt. Innerhalb einer Anzeigefläche 1, die gleich der Bildfläche eines Bildschirms ist, befindet sich ein Randbereich 2 und ein Mittelbereich 3. Im Randbereich 2 sind an vier Stellen, die bezogen auf den Mittelpunkt der Anzeigefläche 1 in etwa jeweils um 90° gegeneinander versetzt sind, vier Schriftzüge für die mit einem nicht dargestellten Bedienelement anzusteuernden bzw. auszulösenden Menüs dargestellt. Es handelt sich dabei um die Menüs Komfort (z.B. Heizungs-, Klima-, Sitz- und Spiegeleinstellungen), Kommunikation (Telefon, Datenverkehr, E-Mail), Fahren (Navigation, Bordcomputer, Reiseinformationen) und Audio (Radio, CD, Klangeinstellung, Internet-Radio). Das Bedienelement ist vorzugsweise ein aus der DE 3836555 A bekannter Dreh-Druckknopf, mit dem durch Drehen innerhalb einer Menühierarchieebene eine Auswahl und durch Drücken eine Enterfunktion=Auslösung des ausgewählten Menü(unter)punkts/Funktion vorgenommen werden kann. Ergänzend oder alternativ ist es auch möglich, die Menüs durch separate Schalter auszulösen. Im dargestellten Beispiel ist bereits der Menüpunkt "Audio" ausgewählt.

Wie in Fig. 1 gezeigt, ist der zugehörige Schriftzug "Audio" durch Highlighten hervorgehoben. Auf dem Bildschirm werden die Markierungen für Audio-Untermenüs Radio, Klang(-einstellungen), CD, (Inter-)Net-audio als geschlossene Oval-Figur dargestellt. Dabei ist die Markierung für das jeweils ausgewählte Untermenü (hier: Radio) durch besondere Helligkeit und Größe optisch hervorgehoben und befindet sich an ein und derselben Stelle im linken oberen Sektor des Ovals.

Ausgehend davon kann der Benutzer das nächste Untermenü mit Hilfe des Bedienelements auswählen. Dreht er dieses im Uhrzeigersinn, wird das Untermenü Klang ausgewählt. Die Drehbewegung des Bedienelements wird durch eine Animation der Oval-Figur mit allen Menüpunkten in die entsprechende Richtung als Symbolisierung der Bewegungsrichtung (Fig .2, Animation symbolisiert durch einen Pfeil), das Erreichen des Untermenüs Klang durch Anzeige der Markierung "Klang" an derselben Stelle im linken oberen Sektor (nicht dargestellt) dargestellt.

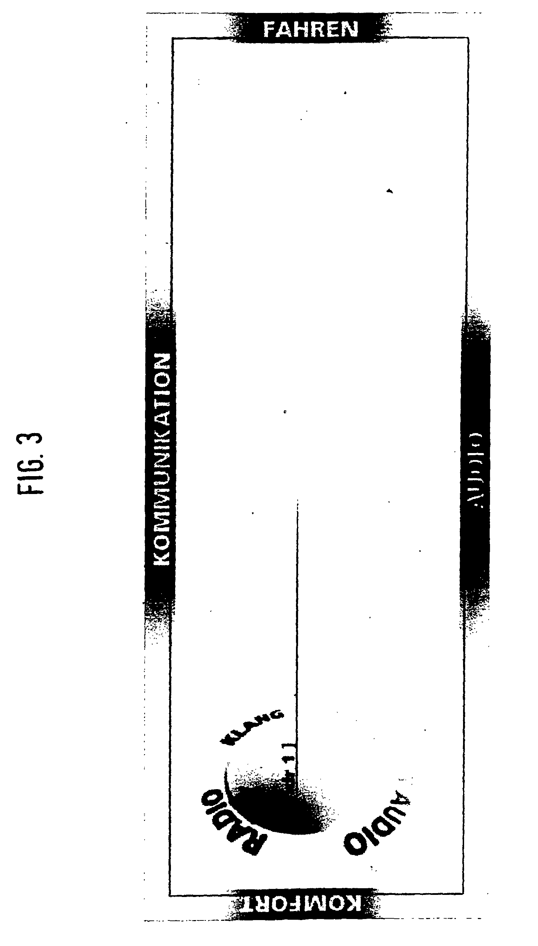

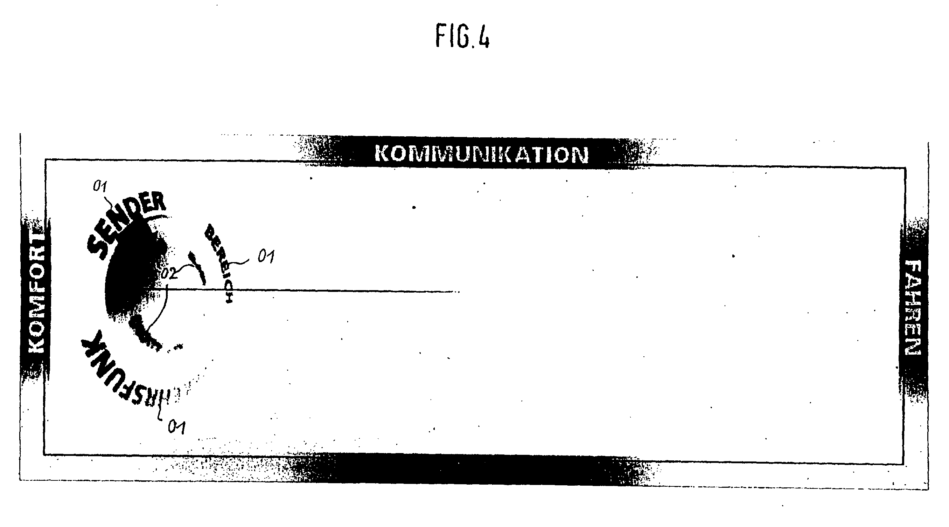

Der Benutzer kann aber auch das Untermenü "Radio" mittels der "Enter"-funktion auslösen. Dies wird zunächst durch eine Verschiebung des Menüpunktes "Radio" zusammen mit den Funktionen derselben Menühierarchiestufe in Richtung Kreiszentrum angezeigt (Fig. 3, Verschiebung symbolisiert durch einen Pfeil) und anschließend ein Bild auf dem Bildschirm dargestellt, wie es in Fig. 4 gezeigt ist. Die Markierungen zu den zugehörigen Radio-Funktionen (eingestellter) Sender, (Frequenz-)Bereich, oder Verkehrsfunk sind anstelle des vorhergehenden Ovals dargestellt. Die Markierung für die ausgelöste Funktion "Sender" befindet sich wieder links oben, die anderen Markierungen sind ebenfalls erkennbar, aber optisch nicht hervorgehoben.

Als weitere Besonderheit ist das Oval O2 der Markierungen für die vorhergehend einstellbaren Untermenüs Radio usw. innerhalb des Ovals O1 angedeutet. Ferner ist es möglich, den Übergang vom Untermenü Radio zu den Radio-Funktionen als Animation wiederzugeben. Hierzu verkleinert sich der Durchmesser des Ovals O1 kontinuierlich bis zum Oval O2. Gleichzeitig mit dem Oval O2 wird das Oval O1 für die Markierungen der Radio-Funktionen wie dargestellt gezeigt.

Das Einstellen einer hierarchiemäßig höheren Ebene wird optisch entsprechend durch Vergrößern des Ovals O2 zum Oval O1 dargestellt. Die zugehörige Bedienoperation kann wie in der DE 3836555 A beschrieben, durch eine separate Zurück-Funktion (nicht dargestellt) oder durch erneutes Drücken der entsprechenden Menütaste ausgelöst werden.

Anstelle der Verkleinerung/Vergrößerung des Ovals O1->O2 bzw. O2-> O1 kann bei einem Übergang in die nächste Hierarchieebene die entgegengesetzte Änderung des Oval-Durchmessers erfolgen. Höhere Hierarchieebenen werden dann mit einem größeren Durchmesser dargestellt als niedrigere Hierarchieebenen.

Auf diese Weise erhält der Benutzer insgesamt optisch auf dem Bildschirm eine Rückmeldung für die von ihm durchgeführten Bedienoperationen.

## Patentansprüche

1. Vorrichtung zur Steuerung einer Bildschirmanzeige für ein Kraftfahrzeug zur Auswahl von Menüs und/oder Funktionen, mit einem drehbaren Bedienelement und mit einer Bildschirmanzeige, in der eine Markierung entsprechend der Stellung des Bedienelements optisch hervorgehoben und stets an derselben Stelle des Bildschirms angeordnet ist, **dadurch gekennzeichnet, dass** mittels einer Enterfunktion das (die) der optisch hervorgehobenen Markierung zugeordnete Menu (Funktion) auslösbar ist und dass dabei dieses (diese) Menü (Funktion) optisch in den Hintergrund tritt.

2. Vorrichtung nach Anspruch 1, **dadurch gekennzeichnet, dass** die den Stellungen des Bedienelements zugeordneten Markierungen auf dem Bildschirm eine kreis- oder ovalförmige Struktur bilden und dass die optisch nicht hervorgehobene(n) Markierung(en) ebenfalls sichtbar ist (sind).

3. Vorrichtung nach Anspruch 2, **dadurch gekennzeichnet, dass** die Markierungen bei der Drehbewegung des Bedienelements ebenfalls eine Drehbewegung ausführen.

4. Vorrichtung nach einem der Ansprüche 1 bis 3, **dadurch gekennzeichnet, dass** die optisch in den Hintergrund tretenden Markierungen eine kreis- oder ovalförmige Struktur kleineren Durchmessers bilden.

5. Vorrichtung nach Anspruch 4, **dadurch gekennzeichnet, dass** die Struktur der optisch in den Hintergrund tretenden Markierungen innerhalb der Struktur der optisch im Vordergrund stehenden Markierungen angeordnet ist.

6. Vorrichtung nach einem der Ansprüche 4 oder 5, **dadurch gekennzeichnet, dass** die dem (der) ausgelösten Menü (Funktion) zugeordneten Untermenüs (-funktionen) optisch an die Stelle der zunächst angezeigten Markierung(en) treten.

## Claims

1. A device for controlling a display unit in a vehicle for selection of menus and/or functions, comprising a rotatable control element and a display unit in which a marking corresponding to the position of the control element is optically emphasised and always situated at the same place on the screen, **characterised in that** an enter function can trigger the menu or function associated with the optically emphasised marking, whereupon the menu or function appears optically in the background.

2. A device according to claim 1, **characterised in** the markings associated with the positions of the control element form a circular or oval structure on the screen, and the optically non-emphasised markings are likewise visible.

3. A device according to claim 2, **characterised in that** when the control element rotates, the markings also rotate.

4. A device according to any of claims 1 to 3, **characterised in that** the markings appearing in the optical background have a smaller-diameter circular or oval structure.

5. A device according to claim 4, **characterised in that** the structure of the markings appearing in the optical background is situated inside the structure of the markings appearing in the optical foreground.

6. A device according to claim 4 or 5, **characterised in that** sub-menus or functions associated with the selected menu or function appear at the same place as the first-displayed markings.

## Revendications

1. Dispositif de commande de l'indication paraissant à l'écran dans un véhicule automobile quand on veut sélectionner un menu et/ou une fonction en utilisant un organe rotatif de manoeuvre, avec sur l'écran la mise en évidence, par voie optique et toujours au même endroit de l'écran, d'une marque correspondant à la position de l'élément de manoeuvre
**caractérisé en ce que**
par une fonction d'entrée, le menu (ou la fonction) associé(e) à la marque mise optiquement en évidence peut être déclenché et ce menu, (ou cette fonction), peut passer optiquement à l'arrière-plan.

2. Dispositif selon la revendication 1,
**caractérisé en ce que**
les positions des marques associées aux positions de l'organe de manoeuvre présentent sur l'écran une structure en forme de cercle ou d'ovale et la (ou les) marque(s) non mise(s) en évidence optiquement est (sont) également visible(s).

3. Dispositif selon la revendication 2,
**caractérisé en ce que**
les marques exécutent également un mouvement de rotation quand l'organe de manoeuvre tourne.

4. Dispositif selon une des revendications 1 à 3,
**caractérisé en ce que**
les marques qui passent optiquement à l'arrière-plan présentent une structure circulaire ou ovale de plus petit diamètre.

5. Dispositif selon la revendication 4,
**caractérisé en ce que**
la structure des marques passant optiquement à l'arrière-plan se trouve à l'intérieur de la structure des marques qui sont optiquement en premier plan.

6. Dispositif selon la revendication 4 ou 5,
**caractérisé en ce que**
les sous-menus (ou sous-fonctions) affectés(es) au menu (ou à la fonction), passent optiquement à la position de la (ou des) marque(s) initialement affectée(s).
